# EUROPÄISCHE PATENTSCHRIFT

(11) **EP 4 232 341 B1**
(45) Veröffentlichungstag und Bekanntmachung des Hinweises auf die Patenterteilung: **09.10.2024**
(21) Anmeldenummer: 21840919.1
(22) Anmeldetag: 20.12.2021
(51) Int. Cl.: B61L 23/04, G01S 7/48, G01S 17/89, G01S 17/931

(54) **SELBSTLERNENDES VERFAHREN ZUR HINDERNISERKENNUNG FÜR EIN SCHIENENFAHRZEUG, HINDERNISERKENNUNGSEINRICHTUNG, UND SCHIENENFAHRZEUG MIT EINER HINDERNISERKENNUNGSEINRICHTUNG**
SELF-LEARNING METHOD FOR OBSTACLE DETECTION FOR A RAIL VEHICLE, OBSTACLE DETECTION UNIT, AND RAIL VEHICLE COMPRISING AN OBSTACLE DETEION UNIT
PORCÉDÉ DE DÉTECTION D'OBSTACLES POUR VÉHICULES FERROVIAIRES À APPRENTISSAGE AUTOMATIQUE, UNITÉ DE DÉTECTION D'OBSTACLES ET VÉHICULE FERROVIAIRE COMPRENANT UNE UNITÉ DE DÉTECTION D'OBSTACLES

(30) Priorität: 28.01.2021 DE 102021200767
(43) Veröffentlichungstag der Anmeldung: 30.08.2023
(73) Patentinhaber: Siemens Mobility GmbH, 81739 München (DE)
(72) Erfinder: SEMA, Albi, 10629 Berlin (DE)
(74) Vertreter: Siemens Patent Attorneys
(86) Internationale Anmeldenummer: PCT/EP2021/086705
(87) Internationale Veröffentlichungsnummer: WO 2022/161701

(56) Entgegenhaltungen:
- EP-A1- 3 048 559
- EP-A2- 3 431 361
- WO-A1-2020/012475
- WO-A2-2018/104454
- US-A1- 2017 066 459

## Beschreibung

Die Erfindung betrifft ein Verfahren zur Hinderniserkennung im Umfeld eines Schienenfahrzeugs. Außerdem betrifft die Erfindung eine bordseitige Hinderniserkennungseinrichtung für ein Schienenfahrzeug. Überdies betrifft die Erfindung ein Schienenfahrzeug.

Im Schienenverkehr kommt es gelegentlich vor, dass Objekte, wie zum Beispiel Personen oder Straßenfahrzeuge, Einkaufswagen, die auf die Schienen geworfen wurden, oder auch Felsbrocken oder umgestürzte Bäume auf den Gleiskörper geraten und daher eine Gefahr für die Sicherheit des Schienenverkehrs darstellen und im Fall der Personen und Straßenfahrzeuge aufgrund der Möglichkeit einer Kollision mit einem fahrenden Schienenfahrzeug auch selbst hochgradig gefährdet werden. Daher müssen solche Objekte rechtzeitig erkannt werden, um für ein sich näherndes Schienenfahrzeug einen Bremsvorgang einzuleiten, so dass ein Zusammenstoß zwischen dem Schienenfahrzeug und den erkannten Objekten verhindert werden kann.

Mithin ist eine Detektion von möglichen Hindernissen jeglicher Form oder Gestalt, welche die Schienen blockieren, eine sicherheitskritische Notwendigkeit für alle Arten von Schienenfahrzeugen. Es gibt viele Lösungsansätze für dieses Problem, wobei auf künstlicher Intelligenz (abgekürzt mit KI) basierende Lösungsansätze am vielversprechendsten sind. Jede KI-basierte Lösung ist so gut wie ihre Trainingsdatenbasis, welche für Schienenverkehrsszenarios sehr aufwändig zusammenzustellen und zu annotieren ist. Da potenzielle Hindernisse jeglicher Art und jeglicher Gestalt und Form erkannt und identifiziert werden müssen, sind Verfahren zur Hinderniserkennung, die nur auf Kamerabilddaten basieren, nicht geeignet. Denn bei diesen Verfahren werden Bildmerkmale gelernt, was sehr objektspezifisch und daher nicht sehr geeignet ist für einen ausreichend sicheren allgemeinen Ansatz. Andererseits kann mit einem Verfahren, bei dem Sensordaten mit Lidarsensoren erfasst werden und als Punktwolke dargestellt werden, ein solcher allgemeine Ansatz realisiert werden. Allerdings hat dieser Ansatz den Nachteil, dass für die erfassten Daten eine sehr lange Verarbeitungszeit benötigt wird und dieser Ansatz daher für Echtzeitanforderungen nicht sonderlich geeignet ist. Bei den vorgenannten Verfahren werden meist Parameter basierend auf der Umgebung, auf die sie angewendet werden, fest eingestellt.

Im Unterschied zu Automobilen fahren die meisten Arten von Schienenfahrzeugen auf bekannten Routen mit einem spezifischen Fahrplan und fahren diese Routen häufig mehrmals am Tag ab. Außerdem ändert sich an den Schienenstrecken meist kaum etwas und diese befinden sich üblicherweise in vom sonstigen Verkehrsgeschehen entfernten, abgetrennten Bereichen und sind normalerweise frei von Hindernissen, die ihren Weg blockieren könnten. Insbesondere Schienenfahrzeuge, die längere Strecken fahren, wie zum Beispiel Regionalzüge oder Intercity-Züge, nutzen Strecken, welche sich in schwach besiedeltem Gebiet befinden, so dass es unwahrscheinlich ist, dass etwas ihren Schienenweg blockiert. Außerdem fahren diese Züge nach Fahrplänen. Mithin suchen sie denselben Bereich immer zu derselben Zeit auf. Infolge der Konsistenz von Raum und Zeit ist die Komplexität der Sensordaten reduziert und erlaubt es Algorithmen, die für den Automotivbereich kaum zu verallgemeinern sind, an eine Schienenumgebung anzupassen.

Es gibt unterschiedliche Ansätze, um eine Echtzeit-Detektion von Anomalien in einem Schienenbereich ohne vorherige Parametrisierung zu realisieren.

Beispielsweise werden Kameras als Objektdetektoren genutzt. Zur Auswertung der von den Kameras erzeugten Bilddaten werden Verfahren zur Objektdetektion oder zur Segmentierung von Bildern genutzt, wobei Objekte in so viele Klassen wie möglich eingeteilt werden. Derartige KI-basierte Ansätze verwenden als Datenbasis umfangreiche allgemein zugängliche Datensätze, die mit zusätzlichen Felddaten angereichert werden, um die besten Detektionsergebnisse zu erhalten und so viele Objekte wie möglich zu erkennen. Das Problem dieser Ansätze besteht darin, dass damit möglicherweise nicht alle Arten von Hindernissen erkannt werden, weil einige davon möglicherweise nicht in den Trainingsdatensätzen enthalten sind, unabhängig davon, wie viele Objekte sie tatsächlich erkennen können.

Alternativ werden auch statische bzw. feststehende Sensoren zur Objekterkennung genutzt. Diese Sensoren können irgendwelche Arten von Bewegungssensoren, Wärmebildkameras oder CCTV-Kameras umfassen, die längs einer Schienenstrecke angeordnet sind. Bei Bewegungssensoren oder Wärmebildkameras kann die Detektion beliebiger Objekte erreicht werden, wenn eine Schwelle für eine spezifische Bewegung oder Temperatur bekannt ist. Bei der Anwendung von CCTV-Kameras wird der Hintergrund entfernt, um jegliche Pixel im Bild zu entdecken, die nicht zum Hintergrund gehören. Allerdings sind diese Ansätze mit hohen Kosten verbunden, da die genutzten Sensoren entlang der gesamten Fahrstrecke positioniert werden müssen und außerdem eine schnelle Kommunikationsverbindung mit dem Schienenverkehrssystem haben müssen, um ein Schienenfahrzeug in Echtzeit warnen zu können.

Weiterhin gibt es Versuche, Objekte in Punktwolken zu erkennen, die von Lidarsensoren erzeugt werden. Dabei gibt es KI-basierte Verfahren und konventionelle modellbasierte Verfahren. KI-basierte Verfahren sind recht erfolgreich bei der Detektion von großen Objekten, wie zum Beispiel Automobilen, aber sie haben Probleme, kleinere Objekte, wie zum Beispiel Menschen, zu erkennen. Außerdem sind bei KI-basierten Verfahren derart viele Daten zu verarbeiten, dass die Verarbeitung selbst für Hochleistungsrechner kaum in Echtzeit zu schaffen ist. Herkömmliche Verfahren zur Verarbeitung von Punktwolken verwenden Technologien, wie zum Beispiel ein Clustering der Filterung, um Anomalien zu detektieren. Solche Methoden weisen viele festeingestellte Parameter auf, die nur durch ein langdauerndes Testverfahren optimiert werden können, falls es überhaupt möglich ist.

Aus der internationalen Veröffentlichung WO 2020/012475 A1 sind Systeme und Verfahren zur Schienen- und Hinderniserkennung bekannt, die auf vorwärts blickender elektrooptischer Bildgebung basieren. Die Bildverarbeitung verwendet einen tief lernenden Ansatz zur semantischen Szenensegmentierung, welcher auf einem neuralen Netzwerk zur Bestimmung von Schienen- und Weichenzuständen beruht, welches den Schienenweg eines Zuges in den vorwärts blickenden Bildaufnahmen bestimmt, und welcher auf einem neuronalen Netzwerk zur Erkennung und Verfolgung von Objekten und Hindernissen beruht, welches die Umgebung des bestimmten Schienenweges analysiert und bevorstehende Hindernisse detektiert.

Die europäische Veröffentlichung EP 3 431 361 A2 zeigt ein Schienenfahrzeug mit einem Bilderzeugungssystem zur Erfassung eines Raumes außerhalb des Schienenfahrzeugs. Das Bilderzeugungssystem weist vier Bilderzeugungseinrichtungen auf, von welchen jede während eines Betriebes des Bilderzeugungssystems zweidimensionale Bilder des Raumes erzeugt oder erzeugen kann. Eine erste und eine zweite der vier Bilderzeugungseinrichtungen sind in einem ersten Abstand zueinander an dem Schienenfahrzeug angeordnet und bilden ein erstes Stereo-Paar, das einen ersten gemeinsamen Teil des Raumes aus unterschiedlichen Blickwinkeln erfasst. Eine dritte und eine vierte der vier Bilderzeugungseinrichtungen sind in einem zweiten Abstand zueinander an dem Schienenfahrzeug angeordnet und bilden ein zweites Stereo-Paar, das einen zweiten gemeinsamen Teil des Raumes aus unterschiedlichen Blickwinkeln erfasst. Der erste gemeinsame Teil des Raumes, der von dem ersten Stereo-Paar erfasst wird, beginnt in größerer Entfernung zu dem Schienenfahrzeug als der zweite gemeinsame Teil des Raumes, der von dem zweiten Stereo-Paar erfasst wird.

Es besteht also die Aufgabe, ein Verfahren und eine Vorrichtung zur Erkennung und Identifizierung von Hindernissen für Schienenfahrzeuge bereitzustellen, welche Anforderungen an eine Echtzeitfunktion, eine allgemeine Anwendbarkeit und Verlässlichkeit besser erfüllen als die vorgenannten Ansätze.

Diese Aufgabe wird durch ein Verfahren zur Hinderniserkennung für ein Schienenfahrzeug gemäß Patentanspruch 1, eine Hinderniserkennungseinrichtung für ein Schienenfahrzeug gemäß Patentanspruch 12 und ein Schienenfahrzeug gemäß Patentanspruch 13 gelöst.

Bei dem erfindungsgemäßen Verfahren zur Hinderniserkennung für ein Schienenfahrzeug werden 3D-Sensordaten von einem Umgebungsbereich des Schienenfahrzeugs erfasst. Die sensoriell erfasste Umgebung des Schienenfahrzeugs umfasst bevorzugt einen vor dem Schienenfahrzeug verlaufenden Fahrkanal des Schienenfahrzeugs, kann aber vorzugsweise auch rechts und links von dem Fahrkanal liegende periphere Bereiche umfassen, um zum Beispiel potenzielle Kollisionshindernisse frühzeitig zu erkennen, bevor sie überhaupt in die Nähe des Fahrkanals gelangt sind.

Auf Basis der 3D-Sensordaten werden 3D-Bilddaten erzeugt. 3D-Sensordaten umfassen im Gegensatz zu 2D-Sensordaten eine Tiefeninformation über den überwachten Umgebungsbereich. Auf Basis der 3D-Bilddaten werden wiederum 2D-Bilddaten erzeugt. Hierzu werden die 3D-Bilddaten auf eine 2D-Ebene projiziert, deren Orientierung vorzugsweise mit der Sichtperspektive des Schienenfahrzeugs übereinstimmt. Auch bevorzugt umfasst diese Sichtperspektive die Perspektive eines aus dem Schienenfahrzeug nach vorne bzw. in Fahrtrichtung schauenden Fahrers und/oder die Perspektive, mit der zumindest ein Teil der Sensoren, welche bevorzugt in Fahrtrichtung bzw. in Richtung der Längsachse des Schienenfahrzeugs ausgerichtet sind, den Umgebungsbereich erfasst.

Wenn in der Anmeldung von 2D-Daten oder 3D-Daten die gesprochen wird, so sollen damit immer zweidimensionale Daten bzw. dreidimensionale Daten gemeint sein.

Weiterhin wird eine 2D-Anomaliemaske durch Vergleich der projizierten 2D-Bilddaten mit beispielsweise vorab oder in Echtzeit oder gar gleichzeitig mit den projizierten 2D-Bilddaten erzeugten, von einem Hindernis freien Referenzbilddaten ermittelt bzw. erzeugt. Dabei werden Bildbereiche als Maskenbereiche für eine 2D-Anomaliemaske in den projizierten 2D-Bilddaten identifiziert, die in den Referenzbilddaten nicht enthalten sind bzw. anders ausgedrückt, die sich von den korrespondierenden Bildbereichen der Referenzbilddaten, also den an derselben Bildposition angeordneten Bildbereichen in den Referenzbilddaten, unterscheiden. Beispielsweise weisen diese Bildbereiche in den projizierten 2D-Bilddaten eine andere Intensität oder andere Graustufen bzw. einen anderen Kontrast auf als in den Referenzbilddaten. Zur besseren Vergleichbarkeit umfassen die Referenzbilddaten vorzugsweise ebenfalls 2D-Bilddaten. Die Referenzbilddaten geben im Gegensatz zu den projizierten 2D-Bilddaten ein Szenario des per Sensoren überwachten Umgebungsbereichs wieder, in dem keine Kollisionshindernisse auftreten. Die 2D-Anomaliemaske in den projizierten 2D-Bilddaten umfasst also die Bildbereiche der projizierten 2D-Bilddaten, in denen im Vergleich zu den Referenzbilddaten eine Differenz auftritt. Hierzu kann beispielsweise ein Differenzbild erzeugt werden, in dem die Bereiche mit hoher Intensität bzw. die hellen Bereiche auf Anomalien bzw. potenzielle Kollisionshindernisse hindeuten. Um die richtigen Referenzbilddaten den 2D-Bilddaten zuordnen zu können, kann zum Beispiel bei der Erzeugung der Referenzbilddaten eine Positionsbestimmung des Schienenfahrzeugs erfolgen. Bei der Aufnahme der den 2D-Bilddaten zugrundeliegenden 3D-Sensordaten wird dann ebenfalls eine Positionsbestimmung des Schienenfahrzeugs durchgeführt, so dass anhand dieser Informationen die korrekt zugeordneten Referenzbilddaten mit den aktuellen projizierten 2D-Bilddaten verglichen werden können. Zur Positionsbestimmung können Markierungen am Rand des Schienenbereichs wie zum Beispiel Balisen, Landmarken auch in Kombination mit odometrischen Verfahren sowie die Satellitennavigation genutzt werden. Wie später noch ausführlich erläutert, ist es sogar möglich, auf die Positionsbestimmung des Schienenfahrzeugs zu verzichten, wenn den projizierten 2D-Bilddaten sowie den Referenzbilddaten einfach dieselben aktuell erfassten 3D-Sensordaten zugrunde liegen.

In einem nachfolgenden Schritt des erfindungsgemäßen Verfahrens wird durch Fusion der 2D-Anomaliemaske mit den 3D-Bilddaten eine 3D-Anomaliemaske in den 3D-Bilddaten erzeugt. Bei der Fusion wird die 2D-Anomaliemaske in das 3D-Bild der 3D-Bilddaten rückprojiziert. Schließlich werden die von der 3D-Anomaliemaske umfassten 3D-Bilddaten als mögliches Kollisionshindernis interpretiert. Aufgrund der Integration der 3D-Anomaliemaske in die 3D-Bilddaten kann auch sofort die Position des potentiellen Hindernisses im Raum bzw. relativ zu dem Schienenfahrzeug ermittelt werden, so dass in Abhängigkeit von dieser Information eine angemessene automatisierte Reaktion des Schienenfahrzeugs auf die Situation, wie zum Beispiel ein automatisiertes Bremsmanöver oder eine Erzeugung eines Warnsignals, korrekt ermittelt und ausgelöst werden kann. Vorteilhaft lassen sich mit dem erfindungsgemäßen Verfahren zur Hinderniserkennung alle Arten von Hindernissen jeglicher Form und Gestalt detektieren, da die Gestalt eines Hindernisses nicht gelernt werden bzw. bekannt sein muss, sondern nur dessen Umgebung bzw. die Umgebung des Schienenfahrzeugs als Basisszenario ohne Kollisionshindernisse bekannt sein muss. Die Objekterkennung erfolgt anhand von 2D-Projektionen, welche im Vergleich zu 3D-Bilddaten ein sehr geringes Datenvolumen aufweisen, so dass der Aufwand zur Datenverarbeitung für die Erkennung von Kollisionshindernissen stark reduziert ist. Mithin kann das Verfahren in Echtzeit durchgeführt werden und es ist auch leicht zu trainieren bzw. umzulernen, wie später noch im Detail erläutert wird, da keine Objekte erkannt werden müssen und die zu verarbeitende Datenmenge vergleichsweise gering ist.

Zur Erzeugung der Referenzbilddaten kann ein selbstlernendes System bzw. ein auf künstlicher Intelligenz basierendes System genutzt werden, das durch ein Trainingsverfahren in die Lage versetzt wird, Referenzbilddaten ohne Anomalien auf Basis von durch die Sensoren des Schienenfahrzeugs erfassten Sensordaten bzw. daraus gewonnenen Bilddaten zu rekonstruieren. Das Trainingsverfahren kann dann effektiv angewendet werden, wenn die Referenzbilddaten selbst anhand der durch die Sensoren erfassten Sensordaten bzw. der daraus gewonnenen Bilddaten in Echtzeit rekonstruiert werden sollen und während des Fahrbetriebs des Schienenfahrzeugs ständig aktualisiert werden sollen. Dabei wird für den Lern- bzw. Trainingsprozess keine Aufsicht durch eine Fachperson benötigt. Es wird auch kein vorab aufwändig erzeugter dedizierter Trainingsdatensatz benötigt, da die Trainingsdaten während der Fahrt des Schienenfahrzeugs in Phasen, in denen kein Kollisionshindernis auftritt, erzeugt werden können. Insbesondere entsteht auch kein Aufwand für eine Annotation und Sammlung solcher Daten durch Experten. Es wird auch keine feste Parametrisierung der Objekterkennung benötigt, da das Verfahren selbstlernend ist und sehr gut auf unterschiedliche Strecken angepasst werden kann. Vorteilhaft wird die Sensorik mit dem Schienenfahrzeug mitgeführt, so dass keine aufwändigen Installationen von statischen Sensoren als Infrastruktur im gesamten Schienennetz benötigt werden. Ähnlich wie bei dem Prinzip der statischen Sensoren wird eine Art Hintergrund aus dem Bild von der Umgebung entfernt, um sich bewegende Objekte zu detektieren. Da die Erfassung der Sensordaten jedoch von einem bewegten Objekt aus - d. h. dem Schienenfahrzeug - erfolgt, kann nicht einfach eine Bewegungsdetektion erfolgen, um bewegliche Anteile der Umgebung zu ermitteln. Vielmehr wird für die Ermittlung der 2D-Anomaliemaske umgekehrt der statische Anteil einer Umgebung entweder durch zeitlich versetzte Erfassung der Referenzbilddaten oder durch eine KI-basierte Rekonstruktion der Referenzbilddaten, bei der die veränderlichen Anteile der Umgebung herausfallen, ermittelt und dann wird vom Gesamtszenario der Umgebung der statische Anteil abgezogen. Vorteilhaft wird die Stärke eines auf künstlicher Intelligenz basierenden Systems genutzt, dass es extrem flexibel auf unterschiedliche Szenarien reagieren kann. Mithin können die Referenzbilddaten bei einem Streckenwechsel schnell und gegebenenfalls in Echtzeit erzeugt und sofort zur Kollisionshinderniserkennung eingesetzt werden.

Die erfindungsgemäße Hinderniserkennungseinrichtung weist eine Sensordatenschnittstelle zum Empfangen von 3D-Sensordaten von einem Umgebungsbereich eines Schienenfahrzeugs auf, an oder in welchem die Hinderniserkennungseinrichtung angeordnet ist. Teil der erfindungsgemäßen Hinderniserkennungseinrichtung ist auch eine Bilderzeugungseinheit zum Erzeugen von 3D-Bilddaten auf Basis der 3D-Sensordaten. Die erfindungsgemäße Hinderniserkennungseinrichtung umfasst zudem eine Projektionseinheit zum Erzeugen von 2D-Bilddaten auf Basis der 3D-Bilddaten durch Projektion der 3D-Bilddaten auf eine Projektionsebene und eine Maskenerzeugungseinheit zum Erzeugen einer 2D-Anomaliemaske durch Vergleich der durch Projektion erzeugten 2D-Bilddaten mit von einem Hindernis freien Referenzbilddaten. Dabei werden Bildbereiche als Maskenbereiche in den 2D-Bilddaten identifiziert, die in den Referenzbilddaten nicht enthalten sind bzw. sich von den korrespondierenden Bildbereichen in den Referenzbilddaten unterscheiden.

Die erfindungsgemäße Hinderniserkennungseinrichtung umfasst weiterhin eine Fusionseinheit zum Erzeugen einer 3D-Anomoliemaske in den 3D-Bilddaten durch Fusion der 2D-Anomaliemaske mit den 3D-Bilddaten. Die erfindungsgemäße Hinderniserkennungseinrichtung weist außerdem eine Hindernisermittlungseinheit zum Identifizieren der von der 3D-Anomaliemaske umfassten 3D-Bilddaten als mögliches Kollisionshindernis auf. Die erfindungsgemäße Hinderniserkennungseinrichtung teilt die Vorteile des erfindungsgemäßen Verfahrens zur Hinderniserkennung für ein Schienenfahrzeug.

Das erfindungsgemäße Schienenfahrzeug weist eine Sensoreinheit zum Erfassen von 3D-Sensordaten von der Umgebung des Schienenfahrzeugs auf. Zudem umfasst das erfindungsgemäße Schienenfahrzeug die erfindungsgemäße Hinderniserkennungseinrichtung. Weiterhin weist das erfindungsgemäße Schienenfahrzeug eine Steuerungseinrichtung zum Steuern eines Fahrverhaltens des Schienenfahrzeugs auf, in Abhängigkeit davon, ob von der Hinderniserkennungseinrichtung ein Hindernis in der Umgebung des Schienenfahrzeugs erkannt wurde. Das erfindungsgemäße Schienenfahrzeug teilt die Vorteile der erfindungsgemä-ßen Hinderniserkennungseinrichtung.

Einige Komponenten der erfindungsgemäßen Hinderniserkennungseinrichtung können zum überwiegenden Teil in Form von Softwarekomponenten ausgebildet sein. Dies betrifft insbesondere die Bilderzeugungseinheit, die Maskenerzeugungseinheit, die Fusionseinheit und die Hindernisermittlungseinheit.

Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher in einem Schienenfahrzeug vorhandene Rechnersysteme nach einer eventuellen Ergänzung durch zusätzliche Hardwareelemente, wie zum Beispiel zusätzliche Sensoreinheiten, auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines solchen Rechnersystems ladbar ist, mit Programmabschnitten, um die durch Software realisierbaren Schritte des erfindungsgemäßen Verfahrens auszuführen, wenn das Computerprogramm in dem Rechnersystem ausgeführt wird.

Ein solches Computerprogrammprodukt kann neben dem Computerprogramm gegebenenfalls zusätzliche Bestandteile, wie z. B. eine Dokumentation und/oder zusätzliche Komponenten, auch Hardware-Komponenten wie z. B. Hardware-Schlüssel (Dongles etc.) zur Nutzung der Software, umfassen.

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann hierzu z. B. einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung des erfindungsgemäßen Verfahrens zur Hinderniserkennung für ein Schienenfahrzeug werden zur Erzeugung der 2D-Bilddaten die 3D-Pixeldaten auf eine Ebene projiziert, die mit der Perspektive einer für die Erfassung der 3D-Sensordaten genutzten Sensoreinheit des Schienenfahrzeugs übereinstimmt. Die 2D-Bilddaten umfassen also quasi eine 2D-Ansicht des auf Basis der Sensordaten erzeugten 3D-Bildes. Vorteilhaft wird in den 2D-Bilddaten dieselbe Perspektive eingenommen wie bei den 3D-Bilddaten, auf deren Grundlage sie erzeugt werden.

Die 3D-Sensordaten umfassen vorzugsweise Lidarsensordaten. Die Verwendung von Lidarsensoren ermöglicht eine besonders robuste Detektion bei unterschiedlichen Licht- und Wetterbedingungen. Damit lässt sich eine präzise 3D-Detektion bei Tag, bei Nacht und in einem Tunnel erreichen. Bevorzugt umfassen die 3D-Bilddaten 3D-Pixeldaten bzw. Bildpunktdaten, welche besonders bevorzugt als Punktwolkendaten auf Basis der Lasersensordaten gewonnen werden können. Auch die 2D-Bilddaten sowie die Referenzbilddaten können als projizierte Pixel erzeugt und dargestellt werden. Vorteilhaft kann die Bilddatenmenge durch die Nutzung von Pixeldaten reduziert werden bzw. an technische Randbedingungen wie zum Beispiel die Rechenkapazität, die Pixelzahl von Rezeptorflächen von Sensoren, wie zum Beispiel Kameras, bzw. die Abtastdichte und Abtastfrequenz eines Lidarsensors angepasst werden.

Die 2D-Bilddaten umfassen bevorzugt ein Intensitätsbild und ein Tiefenbild, das auch als Entfernungsbild bezeichnet wird. Das Tiefenbild kann selbst als 2D-Tiefenbild ausgeführt sein, gibt allerdings durch unterschiedliche Bildintensitäten, beispielsweise unterschiedliche Grauwerte, Tiefeninformationen wieder. Das Tiefenbild wird zur Erzeugung der 2D-Anomaliemaske benötigt. Dabei werden die Informationen des Tiefenbildes im Rahmen eines Nachbearbeitungsschritts verwendet, um falschpositive Pixel bzw. Bildpunkte der 2D-Anomaliemaske loszuwerden. Das Tiefenbild wird einigen einfachen linearen Rechnungen unterzogen, um nur die Bildpunkte beizubehalten, die eine Tiefe aufweisen, die größer als die einer Grundebene ist. Eine Grundebene in einem 2D-Tiefenbild ist definiert als das Medianpixel jeder Zeile aus allen vorhergesagten Pixeln ohne Anomalie derselben Zeile. Das sich ergebende Anomaliebild wird geprüft, um zu ermitteln, ob alle Bildpunkte oder Bildbereiche, die Anomalien zugeordnet wurden, eine Tiefe aufweisen. Wenn das der Fall ist, werden sie als Anomalien beibehalten, falls nicht, werden sie verworfen. Wird bei dem Vergleich der projizierten 2D-Bilddaten mit den Referenzbilddaten ein Differenzbild erzeugt, um Anomalien in den projizierten 2D-Bilddaten zu ermitteln, so kann als Zwischenschritt nach der Erzeugung des Differenzbildes ein Schwellen-Differenzbild erzeugt werden, in dem Intensitätsdaten, die einen vorbestimmten Schwellwert überschreiten, mit einer standardisierten hohen Intensität sehr viel heller dargestellt werden als in dem Differenzbild. Auf diese Weise werden Rauscheffekte bzw. Störeffekte auf die Erzeugung der 2D-Anomaliemaske reduziert. Denn es werden nur Bildbereiche als Anomalien gewertet, deren Intensität bzw. Helligkeit einen vorbestimmten Schwellwert überschreiten.

Die projizierten 2D-Bilddaten umfassen bevorzugt Graustufen-Bilddaten. Vorteilhaft lassen sich die projizierten 2D-Bilddaten als Graustufen-Bilddaten besonders effizient und schnell verarbeiten, da sie viel weniger Datenvolumen einnehmen als beispielsweise dreidimensionale Farbbilddaten. Mithin lässt sich auch leichter eine Echtzeitdetektion von Kollisionshindernissen während einer Fahrt eines Schienenfahrzeugs erreichen. Auch ein Training einer künstlichen Intelligenz auf der Basis von Graustufen-Bilddaten lässt sich besonders schnell und ressourcensparend durchführen, so dass eine schnelle Anpassung einer Rekonstruktion von Referenzbilddaten an geänderte Strecken oder geänderte Streckenverhältnisse möglich wird.

Auf Basis der projizierten 2D-Bilddaten werden bevorzugt 2D-Referenzbilddaten rekonstruiert, welche keine Hindernisobjekte umfassen. Diese Vorgehensweise ist in Phasen möglich, in denen kein Kollisionshindernis im Umgebungsbereich auftritt und die 2D-Bilddaten daher als Referenzbilddaten, welche ein Szenario ohne Kollisionshindernis wiedergeben, genutzt werden können. Aber auch, falls ein solches Kollisionshindernis auftritt, können die 2D-Bilddaten als Grundlage für zu rekonstruierende Referenzbilddaten genutzt werden. Diese Vorgehensweise ist vorteilhaft dann möglich, wenn eine künstliche Intelligenz, beispielsweise ein neuronales Netz, zur Rekonstruktion der 2D-Referenzbilddaten auf Basis der 2D-Bilddaten genutzt wird. Wie später noch ausführlicher erläutert, kann die künstliche Intelligenz dahingehend trainiert werden, dass sie bei der Rekonstruktion der Referenzbilddaten die Kollisionshindernisse übergeht bzw. ignoriert, so dass sie in den Referenzbilddaten nicht mehr auftreten, auch wenn sie in den projizierten 2D-Bilddaten vorhanden sind. Die Referenzbilddaten werden dazu benötigt, die Hindernisobjekte quasi als Differenzbild zu ermitteln, ohne dass diese durch einen Algorithmus erkannt bzw. klassifiziert werden müssen. Vorteilhaft wird auf diese Weise eine Klassifikation der Hindernisse vermieden, wodurch die Hinderniserkennung schnell und flexibel wird.

Die 2D-Referenzbilddaten werden dabei bevorzugt durch eine künstliche Intelligenz bzw. einen auf künstlicher Intelligenz basierenden Algorithmus, vorzugsweise ein künstliches neuronales Netzwerk, rekonstruiert. Ein künstliches neuronales Netzwerk lässt sich besonders flexibel an unterschiedliche Szenarien anpassen. Als ein künstliches neuronales Netzwerk wird vorzugsweise ein variationaler Autoencoder verwendet.

Die künstliche Intelligenz, insbesondere das neuronale Netzwerk, wird bevorzugt während Fahrabschnitten, bei denen das Schienenfahrzeug freie Fahrt hat, für eine Rekonstruktion von Referenzbilddaten trainiert. Als "freie Fahrt" soll ein Zustand verstanden werden, in dem sich das Schienenfahrzeug ungehindert durch potenzielle Kollisionshindernisse fortbewegt. In diesen Fahrabschnitten treten also keine Kollisionshindernisse auf, die das Training des künstlichen neuronalen Netzwerks stören könnten. Ziel ist es, das künstliche neuronale Netzwerk so zu trainieren, dass es alle statischen Merkmale einer Umgebung eines Schienenfahrzeugs, die zum Beispiel an einer Strecke vorhanden sind, die das Schienenfahrzeug regelmäßig gemäß einem Fahrplan befährt, erkennt bzw. zu Bilddaten rekonstruiert, aber nicht irgendwelche zufällig auftretenden beweglichen Objekte erkennt, wie zum Beispiel Personen oder Fahrzeuge, die in den Fahrkanal des Schienenfahrzeugs eindringen könnten. Dabei wird die Schwäche einer künstlichen Intelligenz, nämlich, dass sie nur die Objekte klassifizieren und erkennen kann, mit denen sie auch trainiert wird, als Vorteil genutzt, indem die künstliche Intelligenz nur oder fast nur mit den statischen Hintergrundobjekten der Umgebung trainiert wird und nicht oder nur sehr wenig mit dynamischen Objekten, insbesondere Verkehrsteilnehmern, die potentielle Kollisionsobjekte darstellen können. Durch dieses spezielle Training lässt sich ein hindernisfreies Referenzbild auch auf Basis von Bilddaten rekonstruieren, die solche Kollisionshindernisse umfassen. Denn das künstliche neuronale Netzwerk ist aufgrund des spezifischen Trainings blind gegenüber den zufällig auftretenden Kollisionshindernissen und erfasst sie auch bei einer Bildrekonstruktion eines aktuellen Szenarios, bei dem solche Kollisionshindernisse auftreten können, nicht. Die Referenzbilddaten werden dann wiederum dazu genutzt, um ein Differenzbild aus die Kollisionshindernisse umfassenden projizierten 2D-Bilddaten und den Referenzbilddaten zu erzeugen und so die Kollisionshindernisse zu identifizieren und zu isolieren und als Anomaliemaske zu verwenden. Selbst wenn während eines Trainings eventuell vereinzelt Kollisionshindernisse auftreten und in das Trainingsergebnis mit einflie-ßen, so fallen diese nicht ins Gewicht und reichen in der Regel nicht aus, um die künstliche Intelligenz ausreichend dazu zu trainieren, die Kollisionshindernisse zu klassifizieren und zu identifizieren. Vielmehr werden diese Objekte als Randerscheinung in der gesamten Datenmenge der Trainingsdaten vernachlässigt.

Die Fahrabschnitte, in denen das Schienenfahrzeug freie Fahrt hat, werden für das Training bevorzugt dahingehend ausgesucht, ob das Schienenfahrzeug gerade mit einer vorbestimmten Mindestgeschwindigkeit fährt. Es kann nämlich angenommen werden, dass im Fahrbereich des Schienenfahrzeugs kein Kollisionshindernis aufgetreten ist bzw. auftritt, wenn das Schienenfahrzeug seine Geschwindigkeit beibehält bzw. nicht unter einen vorbestimmten Wert verringert. Alternativ kann auch ein Fahrverhalten des Schienenfahrzeugs über eine wiederholt befahrene Strecke ermittelt werden und ein Toleranzbereich um eine ortsabhängige mittlere Geschwindigkeit, mit der sich das Schienenfahrzeug über die Strecke bewegt, ermittelt werden. Weicht die Geschwindigkeit von diesem Toleranzbereich insbesondere nach unten ab, so kann davon ausgegangen werden, dass gerade ein potenzielles Kollisionshindernis auftritt und das Schienenfahrzeug darauf reagieren musste. Es wird daher der aktuelle Fahrabschnitt bzw. es werden die in diesem Fahrabschnitt gerade erfassten Referenzbilddaten gegebenenfalls verworfen, um in den Referenzbilddaten keine potenziellen Kollisionsobjekte zu haben.

Die Erfindung wird im Folgenden unter Hinweis auf die beigefügten Figuren anhand von Ausführungsbeispielen noch einmal näher erläutert. Es zeigen:
FIG 1 ein Flussdiagramm, welches ein Verfahren zur Hinderniserkennung für ein Schienenfahrzeug gemäß einem Ausführungsbeispiel der Erfindung veranschaulicht,
FIG 2 eine schematische Darstellung von unterschiedlichen Bilddatenarten, die bei dem in FIG 1 veranschaulichten Verfahren erzeugt werden,
FIG 3 eine schematische Darstellung der Schritte zur Bildung einer Anomaliemaske,
FIG 4 ein Flussdiagramm, welches ein Trainingsverfahren zum Training eines variationalen Autoencoders gemäß einem Ausführungsbeispiel der Erfindung veranschaulicht,
FIG 5 eine schematische Darstellung einer Hinderniserkennungseinrichtung gemäß einem Ausführungsbeispiel der Erfindung,
FIG 6 eine schematische Darstellung eines Schienenfahrzeugs gemäß einem Ausführungsbeispiel der Erfindung.

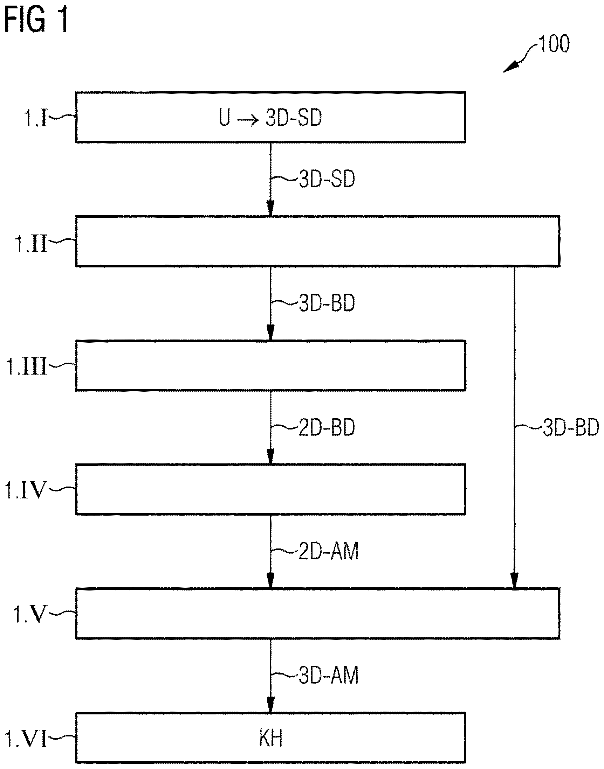

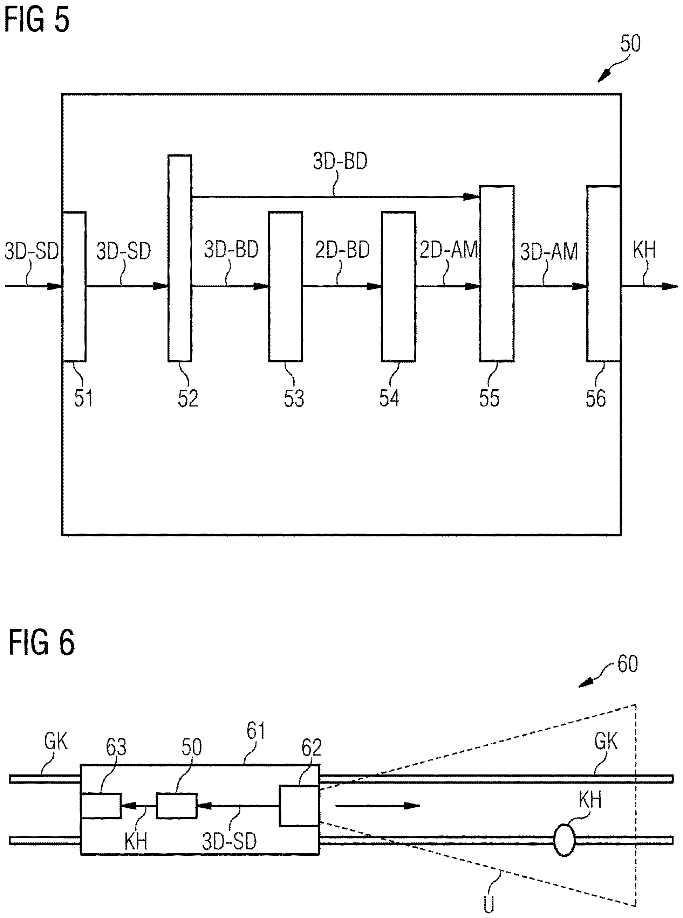

In FIG 1 ist ein Flussdiagramm 100 gezeigt, welches ein Verfahren zur Hinderniserkennung für ein Schienenfahrzeug gemäß einem Ausführungsbeispiel der Erfindung veranschaulicht. Bei dem Schritt 1.I werden 3D-Sensordaten 3D-SD von der Umgebung bzw. einem Umgebungsbereich U eines Schienenfahrzeugs 61 (siehe FIG 6) erfasst. Die Erfassung der 3D-Sensordaten 3D-SD erfolgt durch eine an dem Schienenfahrzeug 61 angeordnete Sensoreinheit 62 (siehe FIG 6). Die Sensoreinheit 62 umfasst ein Lidarsystem, womit dreidimensionale Sensordaten 3D-SD erfasst werden. Die Sensordaten 3D-SD umfassen Informationen über die Topographie des Umgebungsbereichs U des Schienenfahrzeugs 61. Der Umgebungsbereich U umfasst in diesem Ausführungsbeispiel einen Frontbereich vor dem Schienenfahrzeug 61, in den das Schienenfahrzeug 61 einfahren möchte.

Aus den dreidimensionalen Sensordaten 3D-SD werden dann bei dem Schritt 1.II 3D-Pixeldaten 3D-BD als Bilddaten erzeugt. Die 3D-Pixeldaten umfassen beispielsweise sogenannte Punktwolkendaten, welche die von dem Lidarsystem erfassten Abstände des Lidarsystems zu reflektierenden Flächen eines Objekts in dem überwachten Umgebungsbereich U repräsentieren.

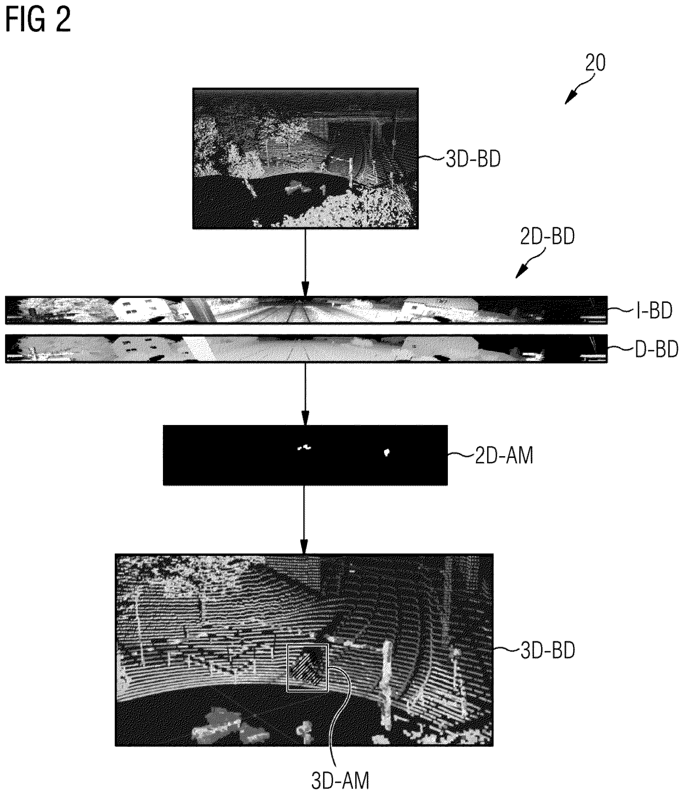

Bei dem Schritt 1.III werden auf Basis der 3D-Pixeldaten 3D-BD 2D-Bilddaten 2D-BD erzeugt. Hierzu erfolgt eine Projektion der 3D-Pixeldaten auf eine 2D-Ebene, die senkrecht zur Orientierung der Sensoreinheit 62 liegt. Genauer gesagt, werden sogar zwei Arten von 2D-Bilddaten 2D-BD erzeugt, nämlich sogenannte Intensitätsdaten I-BD (siehe FIG 2) und sogenannte Distanzdaten bzw. Tiefendaten D-BD (siehe FIG 2). Die Intensitätsdaten I-BD geben Informationen über die Intensität der Reflexion der Lidarwellen an den Flächen der Umgebung U des Schienenfahrzeugs 61 wieder und die Distanzdaten bzw. Tiefendaten D-BD umfassen Informationen hinsichtlich der Abstände der die Lidarwellen reflektierenden Flächen zu der Sensoreinheit bzw. dem Lidarsystem.

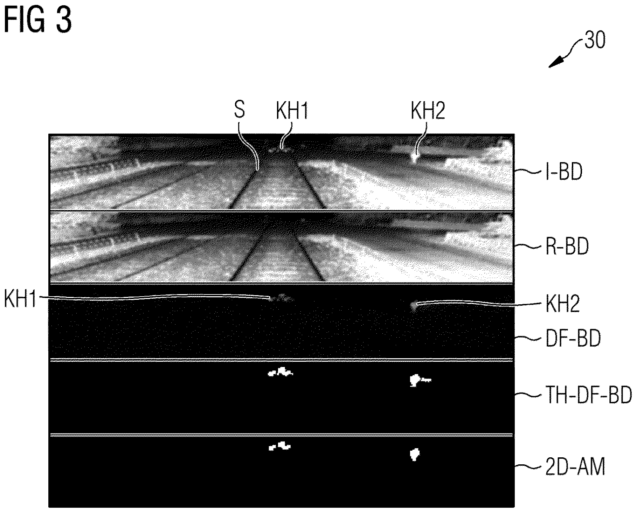

Bei dem Schritt 1.IV wird eine 2D-Anomaliemaske 2D-AM durch Vergleich der 2D-Bilddaten 2D-BD mit von einem Hindernis KH freien Referenzbilddaten R-BD erzeugt. Dabei werden Pixel als Maskenpixel in den 2D-Bilddaten 2D-BD identifiziert, die in den Referenzbilddaten R-BD nicht enthalten sind bzw. die sich von den korrespondierenden Bildbereichen in den Referenzbilddaten unterscheiden. Die bei dem Schritt 1.IV realisierte Vorgehensweise wird im Zusammenhang mit FIG 3 genauer erläutert.

Bei dem Schritt 1.V wird eine 3D-Anomaliemaske 3D-AM in den 3D-Pixeldaten 3D-BD durch Fusion der 2D-Anomaliemaske 2D-AM mit den bei dem Schritt 1.II erzeugten 3D-Pixeldaten 3D-BD erzeugt. Die Fusion kann als eine Art Rückprojektion der 2D-Anomalie-Maske 2D-AM in das 3D-Bild 3D-BD verstanden werden. Dabei werden die 3D-Pixeldaten bzw. Bilddaten, die von der Rückprojektion betroffen sind, als 3D-Anmomalie-Maske 3D-AM aufgefasst bzw. markiert.

Bei dem Schritt 1.VI werden die von der 3D-Anomaliemaske 3D-AM umfassten 3D-Pixeldaten bzw. Bilddaten 3D-BD als mögliches Kollisionshindernis KH interpretiert.

In FIG 2 ist eine schematische Darstellung 20 von unterschiedlichen Bilddatenarten 3D-BD, 2D-BD, I-BD, D-BD, 2D-AM, 3D-AM gezeigt, die bei dem in FIG 1 veranschaulichten Verfahren erzeugt werden.

Als oberstes Bild ist in FIG 2 ein Pixelbild mit den bei dem Schritt 1.II erzeugten 3D-Pixeldaten 3D-BD gezeigt, die eine Punktwolke repräsentieren, die von einem bordseitigen Lidarsensor eines Schienenfahrzeugs von der Umgebung eines Schienenfahrzeugs erzeugt werden.

Das zweitoberste Doppelbild 2D-BD umfasst zwei untereinander angeordnete, unterschiedliche Bilddatenarten, nämlich zweidimensionale Intensitätsbilddaten I-BD und zweidimensionale Distanz-Bilddaten D-BD, oder auch Tiefenbilddaten genannt. Beide Arten von Bilddaten werden bei der Erzeugung der 2D-Anomaliemaske 2D-AM bei dem Schritt 1.IV benötigt.

Als zweiunterstes Bild ist eine zweidimensionale Anomaliemaske 2D-AM gezeigt, wie sie bei dem Schritt 1.IV erzeugt wurde. Wie in FIG 2 zu erkennen ist, weist die zweidimensionale Anomaliemaske 2D-AM lediglich zwei kleine eng begrenzte helle Bereiche auf, während alle übrigen Bildabschnitte dunkel sind, was bedeutet, dass in diesen Bildabschnitten keine Differenz zwischen den projizierten 2D-Bilddaten 2D-BD und den Referenzbilddaten R-BD vorhanden ist.

Als unterstes Bild ist in FIG 2 wieder das bereits als oberstes Bild dargestellte, die 3D-Pixeldaten 3D-BD umfassende 3D-Pixelbild gezeigt, allerdings jetzt angereichert um eine auf der 2D-Anomaliemaske 2D-AM basierende 3D-Anomaliemaske 3D-AM, welche die in dem 3D-Pixelbild vorhandenen Pixel markiert, die einem möglichen Kollisionsobjekt bzw. Kollisionshindernis KH zuzuordnen sind.

In FIG 3 ist eine schematische Darstellung 30 der Schritte zur Bildung einer Anomaliemaske 2D-AM gezeigt. Im Rahmen dieses Vorgangs werden unterschiedliche Bilddatensätze I-BD, R-BD, DF-BD, TH-DF-BD, 2D-AM erzeugt. Daher sind in FIG 3 diese fünf während des in FIG 1 veranschaulichten Verfahrens erzeugten Bildtypen I-BD, R-BD, DF-BD, TH-DF-BD, 2D-AM direkt untereinander dargestellt.

Zuoberst werden zweidimensionale Intensitätsdaten I-BD gezeigt, welche mögliche Kollisionsobjekte, wie zum Beispiel ein Automobil KH1 und einen Fußgänger KH2, wiedergeben und auf Basis der von der Sensoreinheit 62 des Schienenfahrzeugs 61 erfassten 3D-Sensordaten 3D-SD durch eine Projektion in den zweidimensionalen Raum erzeugt werden. Die zweidimensionalen Intensitätsdaten I-BD werden also von den bei dem Schritt 1.III (siehe FIG 1) erzeugten 2D-Bilddaten 2D-BD umfasst. Das Automobil KH1 befindet sich gerade vor dem Schienenfahrzeug 61 bzw. der Sensoreinheit 62 des Schienenfahrzeugs 61 auf den Schienen S, auf denen auch das Schienenfahrzeug 61 unterwegs ist. Der Fußgänger KH2 ist weiter rechts im Bild außerhalb der Schienen S zu erkennen.

Als nächstes Bild ist ein Referenzbild R-BD in FIG 3 dargestellt, welches mit einem sogenannten variationalen Autoencoder VAR auf Basis der 3D-Sensordaten 3D-SD der Sensoreinheit 61 des Schienenfahrzeugs 62 rekonstruiert wird. Der variationale Autoencoder VAR ist dazu trainiert, nur stationäre Merkmale der 3D-Sensordaten 3D-SD in ein zweidimensionales Bild R-BD zu transferieren, so dass in dem Referenzbild R-BD keine Kollisionsobjekte KH1, KH2 auftreten, da der variationale Autoencoder VAR in der Trainingsphase die Rekonstruktion dieser Objekte KH1, KH2 nicht gelernt hat. Die Rekonstruktion des Referenzbildes R-BD erfolgt als Graustufenbild auf Basis von Graustufendaten, so dass ein Trainingsvorgang und ein Prozessvorgang sehr effizient sind und mit wenig Datenspeicher auskommen. Aus diesem Grund kann eine Rekonstruktion eines solchen Referenzbildes R-BD auch in Echtzeit mit wenig spezialisierten Computern erfolgen.

Als drittes Bild von oben ist in FIG 3 ein Differenzbild DF-BD gezeigt, welches auf Basis einer Differenzbildung des Intensitätsbildes I-BD und des Referenzbildes R-BB erzeugt wird. Vorteilhaft zeigt dieses Differenzbild DF-BD nur noch die möglichen Kollisionsobjekte KH1, KH2 bzw. eine Maske dieser Kollisionsobjekte KH1, KH2.

Als viertes Bild von oben ist in FIG 3 ein Schwellen-Differenzbild TH-DF-BD gezeigt, wobei Intensitätsdaten, die einen vorbestimmten Schwellwert überschreiten, mit einer standardisierten hohen Intensität sehr viel heller dargestellt werden als in dem Differenzbild DF-BD. Auf diese Weise werden Rauscheffekte bzw. Störeffekte auf die Erzeugung der Anomaliemaske reduziert.

Als fünftes Bild von oben bzw. als unterstes Bild ist in FIG 3 eine 2D-Anomaliemaske 2D-AM gezeigt. Die 2D-Anomaliemaske 2D-AM wird durch Fusion des Schwellen-Differenzbildes TH-DF-BD mit einem Distanzbild D-BD (siehe FIG 2) gebildet.

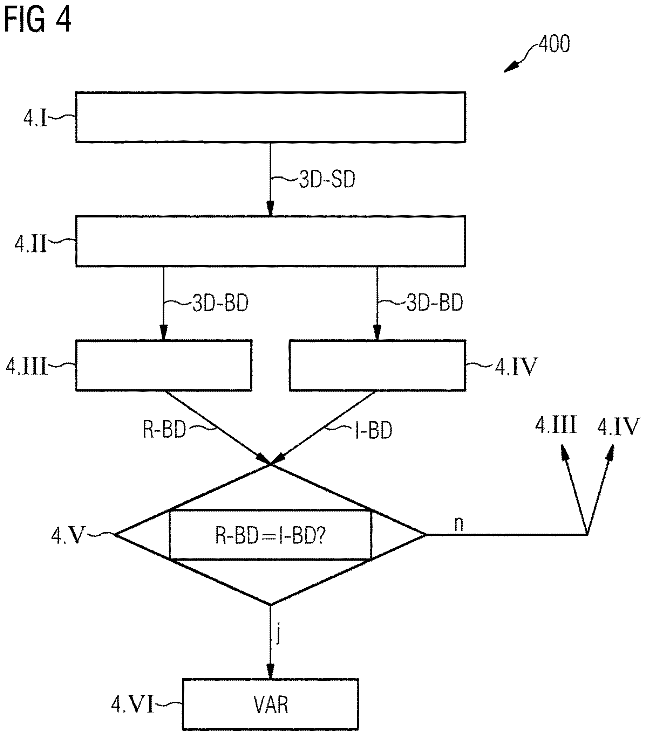

In FIG 4 ist ein Flussdiagramm 400 gezeigt, welches ein Trainingsverfahren zum Training eines variationalen Autoencoders VAR gemäß einem Ausführungsbeispiel der Erfindung veranschaulicht. Der variationale Autoencoder VAR rekonstruiert auf Basis von 3D-Bilddaten 3D-BD ein kollsionshindernisfreies Referenzbild R-BD, welches bei dem in FIG 1 gezeigten Schritt 1.IV zur Erzeugung einer 2D-Anomaliemaske 2D-AM genutzt werden kann.

Im Rahmen des Trainingsverfahrens, das zum Beispiel während einer Fahrt eines Schienenfahrzeugs, bei der keine möglichen Kollisionshindernisse auftauchen, durchgeführt werden kann, werden bei dem Schritt 4.I zunächst 3D-Sensordaten 3D-SD von einem Umgebungsbereich U eines Schienenfahrzeugs 61 erfasst. Auf Basis der erfassten Sensordaten 3D-SD werden bei dem Schritt 4.II 3D-Pixeldaten 3D-BD erzeugt. Auf Basis der 3D-Pixeldaten 3D-BD werden nun bei dem Schritt 4. III Referenzbilddaten R-BD rekonstruiert. Da in den 3D-Pixeldaten keine beweglichen Objekte bzw. potenziellen Kollisionshindernisse vorhanden sind, lernt das neuronale Netzwerk VAR bei diesem Schritt auch nicht, derartige Objekte zu detektieren und zu klassifizieren und ebenfalls zu rekonstruieren. Bei dem Schritt 4.IV werden auch auf Basis der 3D-Pixeldaten 2D-BD direkt Intensitätsbilder I-BD durch Projektion erzeugt.

Dann werden bei dem Schritt 4.V die rekonstruierten Referenzbilddaten R-BD mit den direkt erzeugten Intensitätsbildern I-BD verglichen. Für den Fall, dass die beiden Bilder R-BD, I-BD ausreichend identisch sind, was in FIG 4 mit "j" gekennzeichnet ist, wird zu dem Schritt 4.VI übergegangen und der variationale Autoencoder gilt als hinreichend trainiert.

Für den Fall, dass die beiden Bilder R-BD, I-BD noch nicht ausreichend identisch sind, was in FIG 4 mit "n" gekennzeichnet ist, wird der variationale Autoencoder VAR angepasst und es wird zu den Schritten 4. III, 4.IV übergegangen und der Trainingsprozess wird so lange wiederholt, bis ermittelt wurde, dass der variationale Autoencoder VAR ausreichend trainiert wurde, so dass die Referenzbilddaten R-BD und die Intensitätsbilddaten I-BD hinreichend übereinstimmen.

In FIG 5 ist eine schematische Darstellung einer Hinderniserkennungseinrichtung 50 gemäß einem Ausführungsbeispiel der Erfindung gezeigt.

Die Hinderniserkennungseinrichtung 50 umfasst eine links in FIG 5 dargestellte Sensordatenschnittstelle 51. Die Sensordatenschnittstelle 51 ist dazu eingerichtet, 3D-Sensordaten 3D-SD von einem Umgebungsbereich U eines Schienenfahrzeugs 61 zu empfangen, in dem die Hinderniserkennungseinrichtung 50 angeordnet ist. Die 3D-Sensordaten 3D-SD werden an eine von der Hinderniserkennungseinrichtung 50 umfasste Bilderzeugungseinheit 52 übermittelt, die dazu eingerichtet ist, 3D-Pixeldaten 3D-BD auf Basis der 3D-Sensordaten 3D-SD zu erzeugen. Weiterhin umfasst die Hinderniserkennungseinrichtung 50 auch eine Projektionseinheit 53, welche auf Basis der 3D-Pixeldaten 3D-BD durch eine Projektion 2D-Bilddaten 2D-BD erzeugt. Teil der Hinderniserkennungseinrichtung 50 ist auch eine Maskenerzeugungseinheit 54, welche dazu eingerichtet ist, eine 2D-Anomaliemaske 2D-AM durch Vergleich der 2D-Bilddaten 2D-BD mit durch eine KI-basierte Rekonstruktion erzeugten, von einem Hindernis freien Referenzbilddaten R-BD zu erzeugen. Bei diesem Vorgang werden Pixel als Maskenpixel in den 2D-Bilddaten 2D-BD identifiziert, die in den Referenzbilddaten R-BD nicht enthalten sind. Die 2D-Anomaliemaske 2D-AM wird an eine Fusionseinheit 55 übermittelt, die dazu eingerichtet ist, eine 3D-Anomaliemaske 3D-AM in den 3D-Sensordaten 3D-SD durch Fusion der 2D-Anomaliemaske 2D-AM mit den 3D-Pixeldaten 3D-BD zu erzeugen. Teil der Hinderniserkennungseinrichtung 50 ist auch eine Hindernisermittlungseinheit 56, welche dazu eingerichtet ist, die von der 3D-Anomaliemaske 3D-AM umfassten 3D-Pixeldaten 3D-BD als mögliches Kollisionshindernis KH zu interpretieren.

In FIG 6 ist eine schematische Darstellung 60 eines Schienenfahrzeugs 61 gemäß einem Ausführungsbeispiel der Erfindung veranschaulicht. Das links in FIG 6 schematisch dargestellte Schienenfahrzeug 61 fährt von links nach rechts in Pfeilrichtung auf einem Gleiskörper GK und erfasst dreidimensionale Sensordaten 3D-SD von einem vor dem Schienenfahrzeug 61 liegenden Umgebungsbereich U. Hierzu umfasst das Schienenfahrzeug in seinem Frontbereich eine Sensoreinheit 62. Die 3D-Sensordaten 3D-SD werden an eine Hinderniserkennungseinrichtung 50 übermittelt, die ebenfalls Teil des Schienenfahrzeugs 61 ist und den in FIG 5 veranschaulichten Aufbau hat. Die Hinderniserkennungseinrichtung 50 ermittelt nun auf Basis der 3D-Sensordaten 3D-SD, dass sich in der Umgebung, genauer gesagt auf der rechten Schiene des in FIG 6 gezeigten Gleiskörpers GK, ein Kollisionshindernis KH befindet. Dieses Ergebnis KH wird an eine von dem Schienenfahrzeug 61 umfasste Steuereinrichtung 63 übermittelt, welche in Antwort auf dieses Kollisionshindernis KH Steuerbefehle an einzelne Funktionseinheiten des Schienenfahrzeugs 61 übermittelt. Beispielsweise werden die Bremsen des Schienenfahrzeugs 61 angesteuert, um das Schienenfahrzeug 61 vor dem Kollisionshindernis zum Stehen zu bringen.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zur Hinderniserkennung für ein Schienenfahrzeug (61), aufweisend die Schritte:
- Erfassen von 3D-Sensordaten (3D-SD) von einem Umgebungsbereich (U) des Schienenfahrzeugs (61),
- Erzeugen von 3D-Bilddaten (3D-BD) auf Basis der 3D-Sensordaten (3D-SD),
- Erzeugen von 2D-Bilddaten (2D-BD) auf Basis der 3D-Bilddaten (3D-BD),
- Erzeugen einer 2D-Anomaliemaske (2D-AM) durch Vergleich der 2D-Bilddaten (2D-BD) mit von einem Kollisionshindernis (KH) freien Referenzbilddaten (R-BD), wobei ein Bildbereich als Maskenbereich in den 2D-Bilddaten (2D-BD) identifiziert wird, der sich von einem korrespondierenden Bildbereich in den Referenzbilddaten (R-BD) unterscheidet,
- Erzeugen einer 3D-Anomaliemaske (3D-AM) in den 3D-Bilddaten (3D-BD) durch Fusion der 2D-Anomaliemaske (2D-AM) mit den 3D-Bilddaten (3D-BD),
- Identifizieren der von der 3D-Anomaliemaske (3D-AM) umfassten 3D-Bilddaten (3D-BD) als mögliches Kollisionshindernis (KH) .

2. Verfahren nach Anspruch 1, wobei zur Erzeugung der 2D-Bilddaten (2D-BD) die 3D-Bilddaten (3D-BD) auf eine Ebene projiziert werden, die mit der Perspektive einer für die Erfassung der 3D-Sensordaten (3D-SD) genutzten Sensoreinheit (62) des Schienenfahrzeugs (61) übereinstimmt.

3. Verfahren nach Anspruch 1 oder 2, wobei die 3D-Sensordaten (3D-SD) Lidarsensordaten umfassen.

4. Verfahren nach einem der vorstehenden Ansprüche, wobei die 2D-Bilddaten (2D-BD) ein Intensitätsbild (I-BD) und ein Entfernungsbild (D-BD) umfassen.

5. Verfahren nach einem der vorstehenden Ansprüche, wobei die 2D-Bilddaten (2D-BD) Graustufen-Bilddaten umfassen.

6. Verfahren nach einer der vorstehenden Ansprüche, wobei auf Basis der 2D-Bilddaten (2D-BD) 2D-Referenzbilddaten (R-BD) rekonstruiert werden, welche keine Hindernisobjekte (KH) umfassen.

7. Verfahren nach Anspruch 6, wobei die 2D-Referenzbilddaten (R-BD) durch eine künstliche Intelligenz (KNN) rekonstruiert werden.

8. Verfahren nach Anspruch 7, wobei die künstliche Intelligenz ein künstliches neuronales Netzwerk, vorzugsweise einen variationalen Autoencoder (VAR), umfasst.

9. Verfahren nach Anspruch 7 oder 8, wobei die künstliche Intelligenz während Fahrabschnitten, bei denen das Schienenfahrzeug (61) freie Fahrt hat, für eine Rekonstruktion von hindernisfreien 2D-Referenzbilddaten (R-BD) trainiert wird.

10. Verfahren nach Anspruch 9, wobei die Fahrabschnitte für das Training dahingehend ausgesucht werden, ob das Schienenfahrzeug (61) gerade mit einer vorbestimmten Mindestgeschwindigkeit fährt.

11. Verfahren nach einem der vorstehenden Ansprüche, wobei die sensoriell erfasste Umgebung (U) des Schienenfahrzeugs (61) einen vor dem Schienenfahrzeug (61) verlaufenden Fahrkanal (FK) des Schienenfahrzeugs (62) umfasst.

12. Hinderniserkennungseinrichtung (50), aufweisend:
- eine Sensordatenschnittstelle (51) zum Empfangen von 3D-Sensordaten (3D-SD) von einem Umgebungsbereich (U) eines Schienenfahrzeugs (61),
- eine Bilderzeugungseinheit (52) zum Erzeugen von 3D-Bilddaten (3D-BD) auf Basis der 3D-Sensordaten (3D-SD),
- eine Projektionseinheit (53) zum Erzeugen von 2D-Bilddaten (2D-BD) auf Basis der 3D-Bilddaten (3D-BD),
- eine Maskenerzeugungseinheit (54) zum Erzeugen einer 2D-Anomaliemaske (2D-AM) durch Vergleich der 2D-Bilddaten (2D-BD) mit von einem Kollisionshindernis (KH) freien Referenzbilddaten (R-BD), wobei ein Bildbereich als Maskenbereich in den 2D-Bilddaten (2D-BD) identifiziert wird, der sich von einem korrespondierenden Bildbereich in den Referenzbilddaten (R-BD) unterscheidet,
- eine Fusionseinheit (55) zum Erzeugen einer 3D-Anomaliemaske (3D-AM) in den 3D-Bilddaten (3D-BD) durch Fusion der 2D-Anomaliemaske (2D-AM) mit den 3D-Bilddaten (3D-BD),
- eine Hindernisermittlungseinheit (56) zum Identifizieren (55) der von der 3D-Anomaliemaske (3D-AM) umfassten 3D-Bilddaten (3D-BD) als mögliches Kollisionshindernis (KH).

13. Schienenfahrzeug (61), aufweisend
- eine Sensoreinheit (62) zum Erfassen von 3D-Sensordaten (3D-SD) von der Umgebung des Schienenfahrzeugs (61),
- eine Hinderniserkennungseinrichtung (50) nach Anspruch 12,
- eine Steuereinrichtung (63) zum Steuern eines Fahrverhaltens des Schienenfahrzeugs (61) in Abhängigkeit davon, ob von der Hinderniserkennungseinrichtung (50) ein Kollisionshindernis (KH) in der Umgebung des Schienenfahrzeugs (61) erkannt wurde.

14. Computerprogrammprodukt mit einem Computerprogramm, welches direkt in eine Speichereinheit einer Steuereinrichtung (63) eines Schienenfahrzeugs (61) ladbar ist, mit Programmabschnitten, um alle Schritte eines Verfahrens nach einem der Ansprüche 1 bis 11 auszuführen, wenn das Computerprogramm in der Steuereinrichtung (63) ausgeführt wird.

15. Computerlesbares Medium, auf welchem von einer Rechnereinheit ausführbare Programmabschnitte gespeichert sind, um alle Schritte des Verfahrens nach einem der Ansprüche 1 bis 11 auszuführen, wenn die Programmabschnitte von der Rechnereinheit ausgeführt werden.

## Claims

1. Method of obstacle detection for a rail vehicle (61), having the steps:
- capturing 3D sensor data (3D-SD) from a surrounding area (U) of the rail vehicle (61),
- generating 3D image data (3D-BD) on the basis of the 3D sensor data (3D-SD),
- generating 2D image data (2D-BD) on the basis of the 3D image data (3D-BD),
- generating a 2D anomaly mask (2D-AM) by comparing the 2D image data (2D-BD) with reference image data (R-BD) that is free of a collision obstacle (KH), wherein an image region is identified as a mask region in the 2D image data (2D-BD), which differs from a corresponding image region in the reference image data (R-BD),
- generating a 3D anomaly mask (3D-AM) in the 3D image data (3D-BD) by fusing the 2D anomaly mask (2D-AM) with the 3D image data (3D-BD),
- identifying the 3D image data (3D-BD) incorporated by the 3D anomaly mask (3D-AM) as a possible collision obstacle (KH).

2. Method according to claim 1, wherein for generating the 2D image data (2D-BD), the 3D image data (3D-BD) is projected onto a plane, which coincides with the perspective of a sensor unit (62) of the rail vehicle (61) used for capturing the 3D sensor data (3D-SD).

3. Method according to claim 1 or 2, wherein the 3D sensor data (3D-SD) comprises LIDAR sensor data.

4. Method according to one of the preceding claims, wherein the 2D image data (2D-BD) comprises an intensity image (I-BD) and a distance image (D-BD).

5. Method according to one of the preceding claims, wherein the 2D image data (2D-BD) comprises greyscale image data.

6. Method according to one of the preceding claims, wherein on the basis of the 2D image data (2D-BD) 2D reference image data (R-BD) is constructed which does not comprise any obstacle objects (KH).

7. Method according to claim 6, wherein the 2D reference image data (R-BD) is reconstructed by artificial intelligence (KNN).

8. Method according to claim 7, wherein the artificial intelligence comprises an artificial neural network, preferably a variational autoencoder (VAR).

9. Method according to claim 7 or 8, wherein the artificial intelligence is trained during stages of travel, in which the rail vehicle (61) has a clear line, for a reconstruction of obstacle-free 2D reference image data (R-BD).

10. Method according to claim 9, wherein the stages of travel are selected for the training in terms of whether the rail vehicle (61) is currently traveling at a predetermined minimum speed.

11. Method according to one of the preceding claims, wherein the surroundings (U) of the rail vehicle (61) captured by way of sensors comprises a travel channel (FK) of the rail vehicle (62) extending in front of the rail vehicle (61).

12. Obstacle detection facility (50), having:
- a sensor data interface (51) for receiving 3D sensor data (3D-SD) from a surrounding area (U) of a rail vehicle (61),
- an image-generating unit (52) for generating 3D image data (3D-BD) on the basis of the 3D sensor data (3D-SD),
- a projection unit (53) for generating 2D image data (2D-BD) on the basis of the 3D image data (3D-BD),
- a mask-generating unit (54) for generating a 2D anomaly mask (2D-AM) by comparing the 2D image data (2D-BD) with reference image data (R-BD) that is free of a collision obstacle (KH), wherein an image region is identified as a mask region in the 2D image data (2D-BD), which differs from a corresponding image region in the reference image data (R-BD),
- a fusion unit (55) for generating a 3D anomaly mask (3D-AM) in the 3D image data (3D-BD) by fusing the 2D anomaly mask (2D-AM) with the 3D image data (3D-BD),
- an obstacle-ascertaining unit (56) for identifying (55) the 3D image data (3D-BD) incorporated by the 3D anomaly mask (3D-AM) as a possible collision obstacle (KH).

13. Rail vehicle (61), having
- a sensor unit (62) for capturing 3D sensor data (3D-SD) from the surroundings of the rail vehicle (61),
- an obstacle detection facility (50) according to claim 12,
- a control facility (63) for controlling the travel behaviour of the rail vehicle (61) as a function of whether the obstacle detection facility (50) detected a collision obstacle (KH) in the surroundings of the rail vehicle (61).

14. Computer program product having a computer program, which can be directly loaded into a memory unit of a control facility (63) of a rail vehicle (61), having program segments in order to carry out all steps of a method according to one of claims 1 to 11 when the computer program is executed in the control facility (63).

15. Computer-readable medium on which program segments, which can be executed by a computer unit, are stored in order to carry out all steps of the method according to one of claims 1 to 11 when the program segments are executed by the computer unit.

## Revendications

1. Procédé de détection d'obstacles pour un véhicule (61) ferroviaire, comportant les stades :
- saisie de données (3D-SD) de capteur en 3D d'une partie (U) d'environnement du véhicule (61) ferroviaire,
- production de données (3D-BD) d'image en 3D sur la base des données (3D-SD) de capteur en 3D,
- production de données (2D-BD) d'image en 2D sur la base des données (3D-BD) d'image en 3D,
- production d'un masque (2D-AM) d'anomalie en 2D par comparaison des données (2D-BD) d'image en 2D à des données (R-BD) d'image de référence dégagées d'un obstacle (KH) de collision, dans lequel on identifie, dans les données (2D-BD) d'image en 2D, une partie d'image comme partie de masque, qui se distingue d'une partie d'image correspondante dans les données (R-BD) d'image de référence,
- production d'un masque (3D-AM) d'anomalie en 3D dans les données (3D-BD) d'image en 3D par fusion du masque (2D-AM) d'anomalie en 2D avec les données (3D-BD) d'image en 3D,
- identification des données (3D-BD) d'image en 3D impliquées par le masque (3D-AM) d'anomalie en 3D comme obstacle (KH) de collision possible.

2. Procédé suivant la revendication 1, dans lequel, pour la production des données (2D-BD) d'image en 2D, on projette les données (3D-BD) d'image en 3D sur un plan, qui coïncide avec la perspective d'une unité (62) de capteur du véhicule (61) ferroviaire utilisée pour la saisie des données (3D-SD) de capteur en 3D.

3. Procédé suivant la revendication 1 ou 2, dans lequel les données (3D-SD) de capteur en 3D comprennent des données de capteur lidar.

4. Procédé suivant l'une des revendications précédentes, dans lequel les données (2D-BD) d'image en 2D comprennent une image (I-BD) d'intensité et une image (D-BD) d'éloignement.

5. Procédé suivant l'une des revendications précédentes, dans lequel les données (2D-BD) d'image en 2D comprennent des données d'image en degrés de gris.

6. Procédé suivant l'une des revendications précédentes, dans lequel on reconstruit, sur la base des données (2D-BD) d'image en 2D, des données (R-BD) d'image de référence en 2D, qui ne comprennent pas d'objet (KH) faisant obstacle.

7. Procédé suivant la revendication 6, dans lequel on reconstruit les données (R-BD) d'image de référence en 2D par une intelligence (KNN) artificielle.

8. Procédé suivant la revendication 7, dans lequel l'intelligence artificielle comprend un réseau neuronal artificiel, de préférence un autocodeur (VAR) variationnel.

9. Procédé suivant la revendication 7 ou 8, dans lequel on fait subir, pour une reconstruction de données (R-BD) d'image de référence en 2D dégagée d'obstacle, un apprentissage à l'intelligence artificielle pendant des sections de déplacement où le véhicule (61) ferroviaire circule librement.

10. Procédé suivant la revendication 9, dans lequel on choisit, pour l'apprentissage, les sections de déplacement où le véhicule (61) ferroviaire se déplace exactement à une vitesse minimum déterminée à l'avance.

11. Procédé suivant l'une des revendications précédentes, dans lequel l'environnement (U), détecté par capteur, du véhicule (61) ferroviaire comprend un canal (FK) de circulation s'étendant devant le véhicule (61) ferroviaire.

12. Dispositif (50) de détection d'obstacles, comportant :
- une interface (51) de données de capteur pour la réception de données (3D-SD) de capteur en 3D d'une partie (U) d'environnement d'un véhicule (61) ferroviaire,
- une unité (52) de production d'image pour la production de données (3D-BD) d'image en 3D sur la base de données (3D-SD) de capteur en 3D,
- une unité (53) de projection pour la production de données (2D-BD) d'image en 2D sur la base des données (3D-BD) d'image en 3D,
- une unité (54) de production de masque pour la production d'un masque (2D-AM) d'anomalie en 2D par comparaison des données (2D-BD) d'image en 2D à des données (R-BD) d'image de référence dégagées d'un obstacle (KH) de collision, dans lequel il est identifié, comme partie de masque dans les données (2D-BD) d'image en 2D, une partie d'image, qui se distingue d'une partie d'image correspondante dans les données (R-BD) d'image de référence,
- une unité (55) de fusion pour la production d'un masque (3DAM) d'anomalie en 3D dans les données (3D-BD) d'image en 3D par fusion du masque (2D-AM) d'anomalie en 2D avec les données (3D-BD) d'image en 3D,
- une unité (56) de détermination d'obstacle pour l'identification (55), comme obstacle (KH) de collision possible, des données (3D-BD) d'image en 3D impliquées par le masque (3D-AM) d'anomalie en 3D.

13. Véhicule (61) ferroviaire, comprenant
- une unité (62) de capteur pour la saisie de données (3D-SD) de capteur en 3D de l'environnement du véhicule (61) ferroviaire,
- un dispositif (50) de détection d'obstacle suivant la revendication 12,
- un dispositif (63) de commande pour la commande d'un comportement de circulation du véhicule (61) ferroviaire, en fonction du point de savoir s'il a été détecté, par le dispositif (50) de détection d'obstacle, un obstacle (KH) de collision dans l'environnement du véhicule (61) ferroviaire.

14. Produit de programme d'ordinateur comprenant un programme d'ordinateur, qui peut être chargé directement dans une unité de mémoire d'un dispositif (63) de commande d'un véhicule (61) ferroviaire, comprenant des parties de programme pour exécuter tous les stades d'un procédé suivant l'une des revendications 1 à 11, lorsque le programme d'ordinateur est exécuté dans le dispositif (63) de commande.

15. Support, déchiffrable par ordinateur, sur lequel sont mises en mémoire des parties de programme pouvant être exécutées par une unité d'ordinateur, afin d'exécuter tous les stades du procédé suivant l'une des revendications 1 à 11, lorsque les parties de programme sont exécutées par l'unité d'ordinateur.
